Europäisches Patentamt

European Patent Office

Office européen des brevets

(11) Veröffentlichungsnummer: **0 350 848**
**A2**

## (12) EUROPÄISCHE PATENTANMELDUNG

(21) Anmeldenummer: **89112613.8**

(51) Int. Cl.4: **B60J 1/17**

(22) Anmeldetag: **11.07.89**

(30) Priorität: **15.07.88 DE 3824088**

(43) Veröffentlichungstag der Anmeldung:
**17.01.90 Patentblatt 90/03**

(84) Benannte Vertragsstaaten:
**DE FR GB IT SE**

(71) Anmelder: **METZELER Gesellschaft mit beschränkter Haftung**
**Gneisenaustrasse 15**
**D-8000 München 50(DE)**

(72) Erfinder: **Brocke, Rolf**
**Blumenstrasse 3**
**D-7988 Wangen-Elitz(DE)**

(74) Vertreter: **Michelis, Theodor, Dipl.-Ing.**
**Gneisenaustrasse 15**
**D-8000 München 50(DE)**

(54) Verfahren zur Festlegung eines Fensterführungsprofils.

(57) Zur vollautomatisierbaren Montage und Fixierung eines Fensterführungsprofils im Rahmen einer Kraftfahrzeugtür ist erfindungsgemäß vorgesehen, daß zunächst auf den dem Fensterscheibenrand gegenüberliegenden Bereich des Türrahmens eine Kleberwulst aufgetragen und anschließend das im wesentliche U-förmige Fensterführungsprofil derart in den Rahmen gedrückt wird, daß die außenliegende Grundfläche des Profils die Kleberwulst verpreßt und von dieser gehalten wird.

EP 0 350 848 A2

## Verfahren zur Festlegung eines Fensterführungsprofils

Die Erfindung bezieht sich auf ein Verfahren zur Festlegung eines Fensterführungsprofils im Rahmen einer Kraftfahrzeugtür.

Derartige Fensterführungsprofile, die bewegliche Scheiben in Kraftfahrzeugen seitlich und an der Oberkante einfassen und führen, werden üblicherweise über ein entsprechend angesetztes Klemmprofil auf einen freien Flansch des Türbleches oder des Karosseriebleches aufgeschoben und dann noch über zusätzliche Maßnahmen, wie z.B. Schrauben oder Klipse, in ihrer Lage gehaltert und verankert. Eine derartige Halterung und Verankerung ist jedoch sehr aufwendig und erfordert ein hohes Maß an manueller Tätigkeit, wobei insbesondere in den gebogenen Bereichen Schwierigkeiten auftreten können. Der Erfindung liegt demgegenüber die Aufgabe zugrunde, ein Verfahren zur Festlegung von Fensterführungsprofilen zu schaffen, bei dem das Fensterführungsprofil sehr einfach und insbesondere unter Zuhilfenahme automatisierter Montagesysteme, wie beispielsweise Robotern, in seine Lage im Kraftfahrzeug gebracht und dort sicher verankert werden kann.

Zur Lösung dieser Aufgabe ist erfindungsgemäß vorgesehen, daß zunächst auf den Türrahmenbereich, der in der Ebene der Fensterscheibe liegt und diese umgibt, eine Kleberwulst aufgetragen und anschließend das im wesentliche U-förmige Fensterführungsprofil derart in den Rahmen gedrückt wird, daß die außenliegende Basisfläche des Profils die Kleberwulst verpreßt und von dieser gehalten wird.

Dabei wird also in zwei einfachen voll automatisierbaren Arbeitsgängen zunächst eine relativ dikke Kleberwulst aufgebracht, die nicht nur eine exakte Haftung und Lagersicherung bewirken, sondern auch Fertigungstoleranzen ausgleichen soll. Anschließend wird in einem zweiten Arbeitsgang das Fensterführungsprofil einfach in seine Position gedrückt, wobei die vorher eingebrachte Kleberwulst wegen ihrer relativ großen Masse den Spalt zwischen Profil und Türrahmen voll ausfüllt und nach Aushärtung einen starren Sitz gewährleistet.

Zum leichteren Positionieren ist es dabei auch möglich, daß das Fensterführungsprofil mit einem umlaufenden zusätzlichen Klemmprofilabschnitt versehen und auf einen nach innen ragenden Flansch des Türrahmens aufgeschoben und in seiner Lage bis zum Aushärten des Klebers fixiert wird.

Als Kleberwulst wird zweckmäßigerweise ein aushärtbarer Kleber verwendet.

Ein Fensterführungsprofil zur Anwendung bei einem solchen Befestigungsverfahren ist im wesentlichen dadurch gekennzeichnet, daß das Profil aus einem U-förmigen Grundprofil sowie einem quer dazu angesetzten U-förmigen Klemmprofil besteht, wobei das Grundprofil eine innenliegende, mindestens L-förmige Armierung aufweist und ein Schenkel unter Vorspannung am Karosserieflansch anliegt und vom anderen Schenkel eine Dichtlippe nach innen ragt und vom Klemmprofil ein Schenkel mit dem Basisabschnitt des Grundprofils zusammenfällt.

Zum besseren Kontakt mit dem Kleber ist es dabei zweckmäßig, wenn der an die Kleberwulst angrenzende Profilbereich mit freiliegender Armierungsoberfläche ohne Profilmaterialbedeckung ausgebildet ist.

Zweckmäßigerweise ragt seitlich vom Basisbereich des Klemmprofils noch eine die Kleberwulst abdeckende Lippe ab.

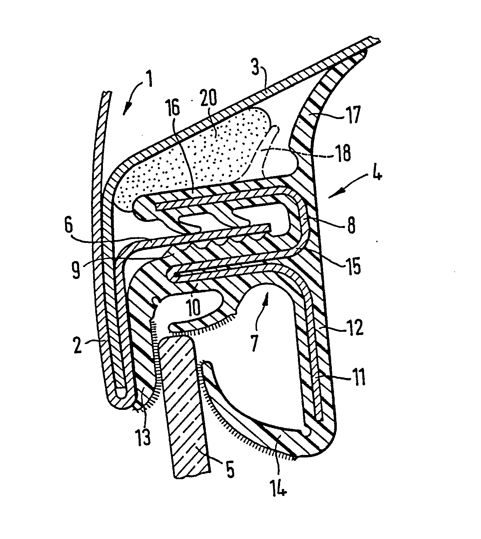

Anhand einer schematischen Zeichnung sind Aufbau und Wirkungsweise eines Ausführungsbeispiels nach der Erfindung näher erläutert. Dabei zeigt die einzige Figur einen Querschnitt durch ein Fensterführungsprofil im direkt verklebten Zustand, das zusätzlich auf einem Blechflansch positioniert ist.

Wie man aus der Figur ersieht, ist von dem Rahmen 1 der Fahrzeugtür lediglich der die Fensteröffnung umgebende Flansch 2 und das daran angesetzte, nach innen ragende Rahmenteil 3 gezeigt. In diese Rahmenecke zwischen Flansch 2 und Rahmenblech 3 soll nunmehr ein Fensterführungsprofil 4 eingesetzt und positioniert werden. Zur leichteren Vormontage und Lagepositionierung ist dabei zusätzlich noch ein vom Rahmenflansch 2 quer zur Scheibe 5 nach innen ragender schmaler Flanschabschnitt 6 vorgesehen, auf dem das Profil 4 positioniert werden kann.

Das eigentliche Fensterführungsprofil 4 besteht aus dem angenähert U-förmigen Grundprofil 7 und einem quer dazu angesetzten, ebenfalls U-förmigen Klemmprofil 8, wobei der eine Schenkel 9 des Klemmprofils 8 mit dem Basisbereich 10 des Grundprofils 7 zusammenfällt.

Das U-förmige Grundprofil 7 weist eine mindestens L-för mige Armierung 11 auf, die sich über den Basisabschnitt 10 und den innenliegenden Schenkel 12 erstreckt. Der außenliegende Schenkel 13 dieses Grundprofils 7 liegt unter Vorspannung am Karosserieflansch 2 an, während vom innenliegenden Schenkel 12 eine Dichtlippe 14 nach innen ragt, wobei zwischen dieser Dichtlippe 14 und dem Schenkel 13 die Scheibe 5 geführt ist.

Das U-förmige Klemmprofil 8 ist ebenfalls mit einer U-förmigen Armierung 15 versehen, die einstückig mit der Armierung 11 des Grundprofils 7 ausgeführt sein kann.

Zur Vorbereitung des Einsetzens des Profils 4 wird nunmehr zunächst auf das Rahmenblech 3 eine Kleberwulst 20 aufgetragen, und zwar über den gesamten Bereich, über den sich anschließend das Profil 4 erstreckt. Dieser Kleberauftrag kann dabei vollautomatisch über einen Roboter erfolgen.

Anschließend wird gegebenenfalls ebenfalls vollautomatisch über einen Roboter das Fensterführungsprofil 4 auf den Flansch 6 aufgesteckt und eingedrückt, bis es mit dem Schenkel 13 bündig auf der Innenseite des Rahmenflansches 2 anliegt und mit dem Schenkel 16 des Klemmprofils 8, der praktisch die Basisfläche des Gesamtprofils bildet, in festen Kontakt mit der Kleberwulst 20 kommt. Diese Kleberwulst 20 ist dabei in hinreichender Stärke und Menge aufgetragen, um den relativ breiten Spalt zwischen dieser Profilbasis 16 und dem Rahmenblech 3 auszufüllen und um evtl. Fertigungstoleranzen des Rahmens 3 auszugleichen. Für eine bessere Haftung am Profil kann es dabei besonders zweckmäßig sein, wenn im Bereich der Armierung 15 des Schenkels 16 dieser auf ihrer Außenseite frei von Profilmaterial ist, so daß die Kleberwulst 20 direkt auf beiden Seiten an zwei Metallflächen anhaftet.

Nach genauer Positionierung des Fensterführungsprofils 4 wird dieses durch die entsprechend breitgedrücke Kleberwulst 20 zunächst in seiner Lage gehalten und in dieser nach Aushärten des Klebers fest und dauerhaft positioniert.

Zur Abdeckung des Kleberspaltes weist das Fensterführungsprofil 4 noch eine Dichtlippe 17 auf, die sich von der freiliegenden Ecke des Klemmprofils 8 bis zum Rahmenblech 3 erstreckt. Um darüber hinaus noch die Ausbreitung der Kleberwulst 20 nach der Seite zu beschränken, kann auch eine zusätzliche Lippe 18 vorgesehen sein, die innerhalb der den gesamten Kleberspalt überbrückenden Lippe 17 liegt.

Wie anhand des Ausführungsbeispiels gezeigt, können also insbesondere Fensterführungsprofile besonders leicht und exakt und in vollautomatisierten Arbeitsschritten am Türrahmen oder einem entsprechenden Karosserieausschnitt positioniert und festgelegt werden.

Vorstehend ist die Erfindung anhand einer speziellen Profilgestaltung beschrieben worden. Es ist aber auch in gleicher Weise möglich, Profile anderen Querschnittes und anderer Funktionsweise zu positionieren und dauerhaft in ihrer Lage zu halten.

## Ansprüche

1. Verfahren zur Festlegung eines Fensterführungsprofils im Rahmen einer Kraftfahrzeugtür, dadurch gekennzeichnet, daß zunächst auf den Türrahmenbereich, der in der Ebene der Fensterscheibe liegt und diese umgibt, eine Kleberwulst aufgetragen und anschließend das im wesentliche U-förmige Fensterführungsprofil derart in den Rahmen gedrückt wird, daß die außenliegende Basisfläche des Profils die Kleberwulst verpreßt und von dieser gehalten wird.

2. Verfahren nach Anspruch 1, dadurch gekennzeichnet, daß das Profil mit einem umlaufenden, zusätzlichen Klemmprofilabschnitt auf einen nach innen ragenden Flansch des Türrahmens aufgeschoben und in seiner Lage bis zum Aushärten des Klebers fixiert wird.

3. Verfahren nach Anspruch 1 oder 2, dadurch gekennzeichnet, daß als Kleberwulst ein aushärtbarer Kleber verwendet wird.

4. Fensterführungsprofil zur Anwendung bei einem Verfahren nach Anspruch 1 und 2, dadurch gekennzeichnet, daß das Profil (4) aus einem U-förmigen Grundprofil (7) sowie einem quer dazu angesetzten U-förmigen Klemmprofil (8) besteht, wobei das Grundprofil (7) eine innenliegende, mindestens L-förmige Armierung (11) aufweist und ein Schenkel (13) unter Vorspannung am Karosserieflansch (2) anliegt und vom anderen Schenkel (12) eine Dichtlippe (14) nach innen ragt, und vom Klemmprofil (8) ein Schenkel (9) mit dem Basisabschnitt (10) des Grundprofils (7) zusammenfällt.

5. Fensterführungsprofil nach Anspruch 4, dadurch gekennzeichnet, daß der an die Kleberwulst (20) angrenzende Profilbereich (16) mit freiliegender Armierungsoberfläche ohne Profilmaterialbedeckung ausgebildet ist.

6. Fensterführungsprofil nach Anspruch 4, dadurch gekennzeichnet, daß seitlich vom Basisbereich des Klemmprofils (8) eine die Kleberwulst (20) abdeckende Lippe (17) abragt.